# EUROPEAN PATENT APPLICATION

(11) **EP 2 892 001 A1**
(43) Date of publication of application: **08.07.2015**
(21) Application number: 12883852.1
(22) Date of filing: 31.08.2012
(51) Int. Cl.: G06F 21/30, G06F 13/00

(54) **ACCESS PERMISSION SYSTEM AND ACCESS PERMISSION DETERMINATION METHOD**

(71) Applicant: NEC CASIO Mobile Communications, Ltd., Kawasaki-shi, Kanagawa 211-8666 (JP)
(72) Inventor: INOUE Masakazu, Kawasaki-shi Kanagawa 211-8666 (JP)
(74) Representative: Vossius & Partner Patentanwälte Rechtsanwälte mbB
(86) International application number: PCT/JP2012/072190
(87) International publication number: WO 2014/033919

(57) **Abstract**

An access permission system includes a collaboration activity information generation unit configured to generate collaboration activity information which is information indicating that a user of an information communication terminal and a user of an information communication terminal collaborated to perform a predetermined activity and a permission unit configured to permit the information communication terminal to access information about the user of the other information communication terminal when the collaboration activity information generated is confirmed.

## Description

### TECHNICAL FIELD

The present invention relates to an access permission system and an access permission determination method for determining whether to permit access when a certain information communication terminal requests the access to information about a user of another information communication terminal.

### BACKGROUND ART

Recently, information communication terminals such as mobile phones have become widespread, and information such as phone numbers has been frequently exchanged. For the exchange of the information, near field communication such as infrared communication or e-mail has been used in many cases.

However, there is a problem in that the exchange of information is difficult in some information communication terminals because not all information communication terminals are equipped with a near field communication function such as infrared communication. In addition, when e-mail is used, there is a problem in that there is difficulty because the e-mail address of a partner is required to be input.

As a method of solving this problem, there is a method of recording information for frequently exchanging a phone number or the like in a server device and allowing a partner to download corresponding information. Using this method, a user can perform the exchange of information without trouble.

Also, in Patent Document 1, technology for enabling an opponent to be rapidly found by enabling personal information and use situations of other users registered in advance to be known in an online game system is disclosed.

In addition, in Patent Document 2, a system for exchanging profile information between users in a community site and technology for determining whether to disclose a profile using a history of mutually exchanged mails or the like as conditions are disclosed.

In addition, in Patent Document 3, technology for acquiring an activity situation of a user using a sensor of a terminal and displaying the activity situation on a terminal of another user is disclosed.

### [Documents of the prior art]

### [Patent Documents]

[Patent Document 1]
   Japanese Unexamined Patent Application, First Publication No. 2002-157204
[Patent Document 2]
   Japanese Unexamined Patent Application, First Publication No. 2005-004342
[Patent Document 3]
   Japanese Unexamined Patent Application, First Publication No. 2005-217508

### DISCLOSURE OF INVENTION

### [Problems to be solved by the invention]

However, there is a problem in that, when information is exchanged by recording the information in the server device, a person who is less familiar with a user can also view the information about the user. It is not preferable to publish personal information to an unspecified person because the personal information such as a phone number is also included in information that is frequently exchanged.

Although it is possible to allow only a person knowing a password to view information by setting the password for the information, there is a problem in that it is difficult for the user to tell the partner the password if the user has forgotten the password or that it is difficult for the partner to view the information when the partner has forgotten the password.

### [Means for solving the problem]

An access permission system according to the present invention has been made to solve the above-described objective and is an access permission system for determining whether to permit access from a first information communication terminal when the first information communication terminal requests a second information communication terminal to permit the access to information about a user of the second information communication terminal, the access permission system including: a collaboration activity information generation unit configured to generate collaboration activity information which is information indicating that a user of the first information communication terminal and the user of the second information communication terminal collaborated to perform a predetermined activity; and a permission unit configured to permit the first information communication terminal to access the information about the user of the second information communication terminal when the collaboration activity information generated is confirmed.

In addition, an access permission determination method according to the present invention is an access permission determination method of determining whether to permit access when a first information communication terminal requests a second information communication terminal to permit access to information about a user of the second information communication terminal, the access permission determination method including: a first step of generating, by the second information communication terminal, collaboration activity information which is information indicating that a user of the first information communication terminal and the user of the second information communication terminal collaborated to perform a predetermined activity; and a second step of permitting, by a device storing information about the user of the second information communication terminal, the first information communication terminal to access the information about the user of the second information communication terminal when the collaboration activity information generated is confirmed.

### [Effects of the Invention]

According to the access permission system related to the present invention, access of the first information communication terminal to information possessed by the second information communication terminal or access of the second information communication terminal to information possessed by the first information communication terminal is permitted by confirming collaboration activity information which is information indicating that the user of the first information communication terminal and the user of the second information communication terminal collaborated to perform a predetermined activity. When the user of the first information communication terminal and the user of the second information communication terminal have performed a predetermined activity (for example, an activity of appearing in a photo, an activity of conversing, an activity of shaking hands, or the like) in collaboration, the users can be said to be familiar to a certain extent. Thus, it is possible to permit only a specific person to have access without using a password by permitting access to information according to presence/absence of the collaboration activity information.

### BRIEF DESCRIPTION OF THE DRAWINGS

FIG. 1 is a schematic block diagram showing a configuration of an access permission system in the first embodiment of the present invention.
FIG. 2 is a diagram showing an example in which information is stored by an authentication information storage unit in the first embodiment of the present invention.
FIG. 3 is a first flowchart showing an operation of the access permission system in the first embodiment of the present invention.
FIG. 4 is a schematic diagram of a procedure of determining a face feature quantity to be registered in a permitted user identification table by a server device receiving a permission request in the first embodiment of the present invention.
FIG. 5 is a second flowchart showing an operation of the access permission system in the first embodiment of the present invention.
FIG. 6 is a schematic block diagram showing a configuration of an access permission system in a second embodiment of the present invention.
FIG. 7 is a first flowchart showing an operation of the access permission system in the second embodiment of the present invention.
FIG. 8 is a second flowchart showing an operation of the access permission system in the second embodiment of the present invention.
FIG. 9 is a schematic block diagram showing a configuration of an access permission system in a third embodiment of the present invention.
FIG. 10 is a flowchart showing an operation of the access permission system in the third embodiment of the present invention.
FIG. 11 is a flowchart showing an operation of an access permission system in a fourth embodiment of the present invention.

### EMBODIMENTS FOR CARRYING OUT THE INVENTION

### <First embodiment>

Hereinafter, the first embodiment of the present invention will be described in detail with reference to the drawings.

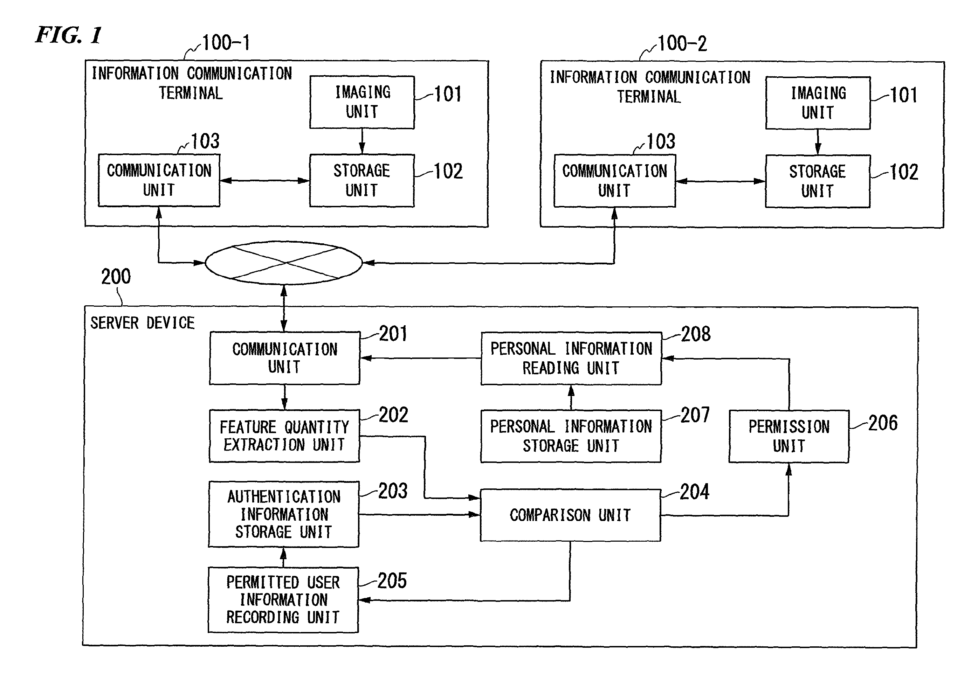

FIG. 1 is a block diagram showing a configuration of an access permission system based on the first embodiment according to the present invention.

The access permission system includes a plurality of information communication terminals 100-1 and 100-2 (hereinafter, the information communication terminals 100-1 and 100-2 are collectively referred to as an information communication terminal 100) and a server device 200. The server device 200 stores personal information about a user in the information communication terminal 100 and controls access to the personal information by the information communication terminal 100. Also, in the first embodiment, the case in which the information communication terminal 100-1 requests access to the personal information possessed by the user of the information communication terminal 100-2 will be described.

The information communication terminal 100 includes an imaging unit 101, a storage unit 102, and a communication unit 103.

The imaging unit 101 performs imaging via an optical system and generates image data. Also, the image data generated by the imaging unit 101 may be still image data or moving image data.

The storage unit 102 stores image data captured by the imaging unit 101 or data received by the communication unit 103.

The communication unit 103 performs communication with another information communication terminal 100 or the server device 200. Also, the communication unit 103 transmits a permission request by which a user of another terminal requests access to personal information related to a user of the terminal or an access request by which the user of the terminal requests access to personal information about the user of the other terminal to the server device 200. Also, image data in which both the user of the terminal and the user of the other terminal requesting the access are shown together is attached to the permission request. In addition, image data in which the user of the terminal is shown is attached to the access request.

The server device 200 includes a communication unit 201, a feature quantity extraction unit 202, an authentication information storage unit 203, a comparison unit 204, a permitted user information recording unit 205, a permission unit 206, a personal information storage unit 207, and a personal information reading unit 208.

The communication unit 201 performs communication with the information communication terminal 100. Specifically, the communication unit 201 receives the permission request or the access request from the information communication terminal 100 and transmits the personal information read based on the access request to the information communication terminal 100.

The feature quantity extraction unit 202 extracts a face region from the image data received from the information communication terminal 100 and extracts a feature quantity (hereinafter referred to as a face feature quantity) from the extracted face region.

Also, the image data received from the information communication terminal 100 is image data attached to the permission request or image data attached to the access request.

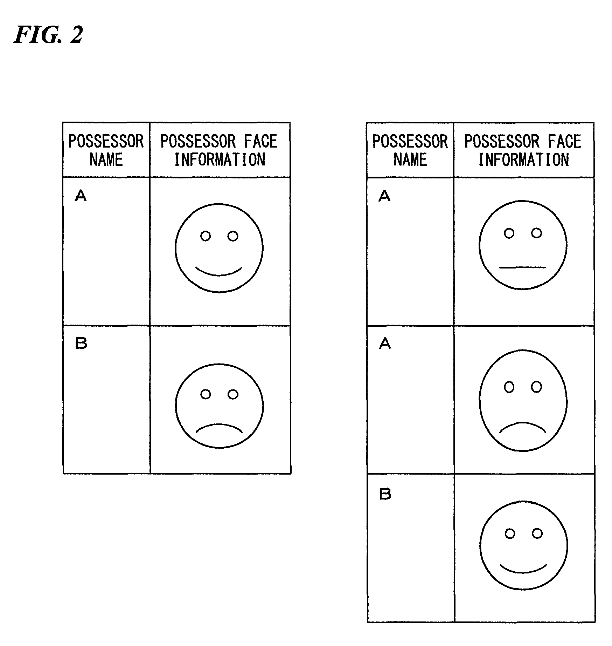

FIG. 2 is a diagram showing an example in which information is stored by the authentication information storage unit 203.

The authentication information storage unit 203 stores a possessor identification table ((A) of FIG. 2) storing a face feature quantity for use in authentication of the user of the information communication terminal 100 in association with identification information about the information communication terminal 100 and a permitted user identification table ((B) of FIG. 2) storing a face feature quantity for use in authentication for a user of a separate information communication terminal to access the personal information about the information communication terminal 100 in association with identification information about the information communication terminal 100.

The comparison unit 204 determines whether to approve the permission request or the access request by comparing between the face feature quantity extracted by the feature quantity extraction unit 202 and the face feature quantity stored by the authentication information storage unit 203. Specifically, the comparison unit 204 determines whether to approve the permission request by determining whether the face feature quantity extracted from the image data included in the permission request is similar to the face feature quantity stored in the possessor identification table of the authentication information storage unit 203. In addition, the comparison unit 204 determines whether to approve the access request by determining whether the face feature quantity extracted from the image data included in the access request is similar to the face feature quantity stored in the applicant identification table of the authentication information storage unit 203.

When the permission request has been approved, the permitted user information recording unit 205 associates the face feature quantity extracted from the image data attached to the permission request with the identification information about the information communication terminal 100 transmitting the permission request and records an association result in the authentication information storage unit 203.

When the access request has been approved, the permission unit 206 permits the personal information reading unit 208 to read personal information about the user of the information communication terminal indicated by an access request.

The personal information storage unit 207 stores personal information about the user (possessor) of the information communication terminal 100 in association with the identification information about the information communication terminal 100.

The personal information reading unit 208 reads the personal information about the user indicated by the access request from the personal information storage unit 207.

Next, an operation of the access permission system according to the first embodiment of the present invention will be described.

Here, a flow of access permission for personal information using this access permission system will be described.

The user of the information communication terminal 100-2 registers his/her own personal information and image data including his/her own face in the server device 200 in advance. Thereby, the personal information is recorded in the personal information storage unit 207 of the server device 200 and the face feature quantity is recorded in the authentication information storage unit 203.

Next, when the user of the information communication terminal 100-2 has become familiar with the user of the information communication terminal 100-1 and it is considered acceptable to disclose the personal information to the user of the information communication terminal 100-1, the user of the information communication terminal 100-2 captures image data shown along with the user of the information communication terminal 100-1 and transmits the permission request to which the image data is attached to the server device 200. Thereby, the server device 200 records face feature information other than that of the user of the information communication terminal 100-2 from among face feature information extracted from the image data attached to the permission request as face feature information about a permitted user in the authentication information storage unit 203. Also, it is preferable to apply a copy guard to image data attached to a permission request. Thereby, the image data is not transmitted to another information communication terminal 100.

Next, when the user of the information communication terminal 100-1 accesses the personal information about the user of the information communication terminal 100-2, the user of the information communication terminal 100-1 captures image data including his/her own face and transmits an access request to which the image data is attached to the server device 200. When the face feature quantity extracted from the image data attached to the access request is similar to the face feature quantity of the permitted user, the server device 200 permits the information communication terminal 100-1 to access the personal information.

Based on the above-mentioned flow, the operation of the server device 200 according to the first embodiment will be described. First, the operation of the server device 200 when the permission request is received from the information communication terminal 100-2 will be described.

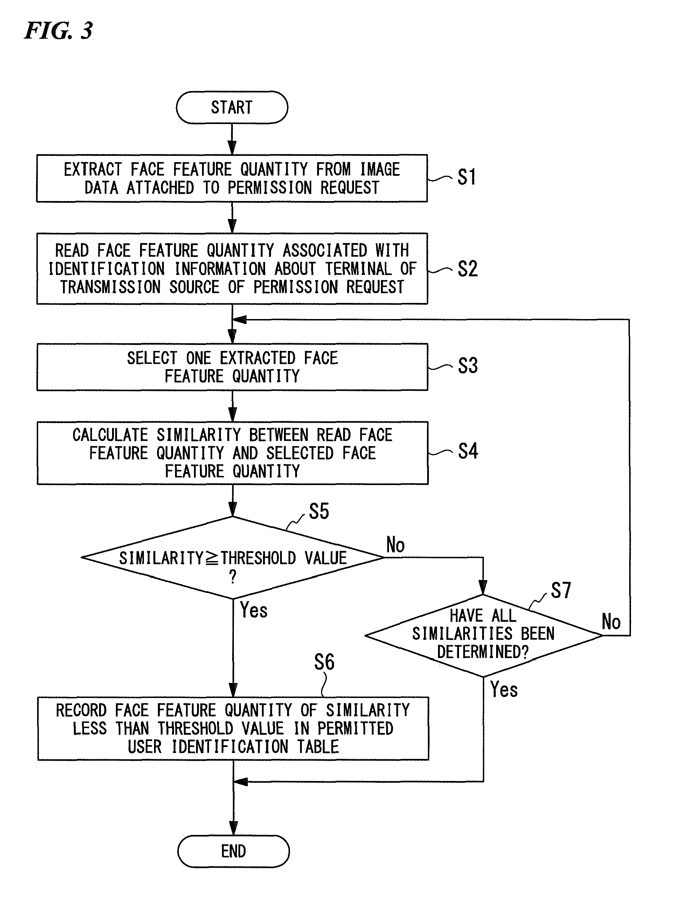

FIG. 3 is a first flowchart showing an operation of the access permission system according to the first embodiment of the present invention.

First, when the communication unit 201 of the server device 200 receives the permission request from the information transmission terminal 100-2, the feature quantity extraction unit 202 extracts the face feature amount from the image data attached to the permission request (step S1). The extraction of the face feature amount, for example, is performed by main component analysis or the like for the face region extracted from the image data. Also, because a plurality of persons are included in image data attached to the permission request as described above, the feature quantity extraction unit 202 is configured to extract a face feature quantity of each person. Also, the number of persons shown along with the possessor in the image data is not limited to only one and a plurality of other persons may also be shown. Also, in this case, a plurality of persons are permitted access.

Next, the comparison unit 204 reads the identification information about the information communication terminal 100-2 of a transmission source from the permission request and reads the face feature quantity associated with the identification information from the possessor identification table of the authentication information storage unit 203 (step S2). Next, the comparison unit 204 selects one face feature quantity from face feature quantities extracted in step S1 (step S3).

Next, the comparison unit 204 compares the face feature quantity read in step S2 to the face feature quantity selected in step S3, and calculates similarity therebetween (step S4). For example, when the face feature quantity is represented by a multidimensional vector, the calculation of the similarity can be represented using its cosine distance. Also, the similarity is indicated to be higher when a similarity value is larger and the similarity is indicated to be higher when a cosine distance value is closer to 0.

Next, the comparison unit 204 determines whether the similarity of the face feature quantity is greater than or equal to a predetermined threshold value (step S5). When the comparison unit 204 determines that the similarity of the face feature quantity is greater than or equal to the predetermined threshold value (step S5: Yes), the permitted user information recording unit 205 associates a face feature quantity other than a face feature quantity having the similarity greater than or equal to the predetermined threshold value in step S5 with that among the face feature quantities extracted by the feature quantity extraction unit 202 with identification information about the information communication terminal 100-2 of the transmission source of the permission request and records an association result in the permitted user identification table of the authentication information storage unit 203 (step S6).

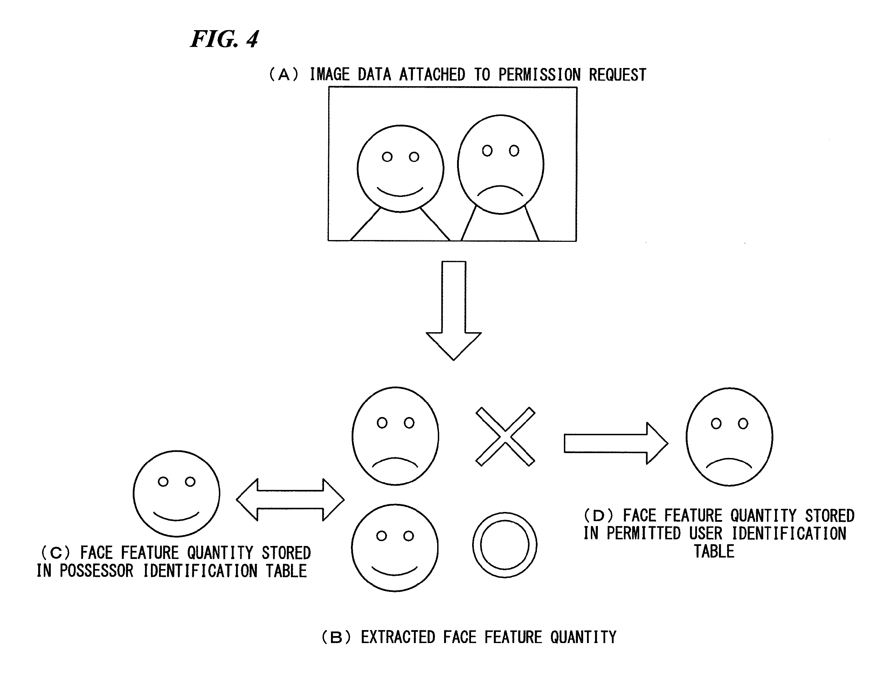

FIG. 4 is a schematic diagram of a procedure of determining a face feature quantity to be registered by the server device 200 receiving a permission request in the permitted user identification table.

The server device 200 extracts the face feature quantity ((B) of FIG. 4) from image data ((A) of FIG. 4) attached to the permission request and calculates the similarity with the face feature quantity ((C) of FIG. 4) stored in the possessor identification table with respect to each face feature quantity in step S1. When the result of the calculation indicates that a face feature quantity in which the similarity is greater than or equal to the threshold value is included, the server device 200 determines a face feature quantity other than that in which the similarity is greater than or equal to the threshold value as the face feature quantity ((D) of FIG. 4) stored in the permitted user identification table.

Thereby, when the possessor himself/herself is included in the image data attached to the permission request, it is possible to register a person shown along with the possessor as a permitted user.

In addition, when the comparison unit 204 determines that the similarity of the face feature quantity is less than the predetermined threshold value (step S5: NO), it is determined whether similarities for all face feature quantities extracted in step S1 are determined (step S7). When the comparison unit 204 determines that there is a face feature quantity for which the similarity is not determined (step S7: NO), the process returns to step S3 and the selection of another face feature quantity is performed. Then, when the comparison unit 204 determines that the similarities for all the face feature quantities are determined (step S7: YES), the error is returned without performing the registration of the permitted user because the possessor himself/herself is not included in the image data attached to the permission request and the process ends.

Next, the operation of the server device 200 when the access request is received from the information communication terminal 100-1 will be described.

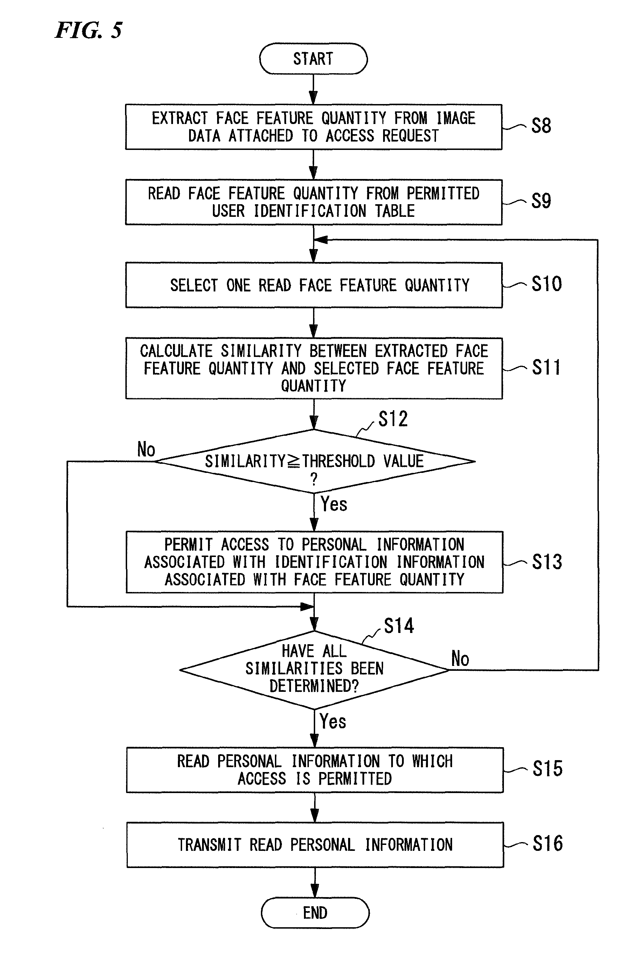

FIG. 5 is a second flowchart showing an operation of the access permission system in the first embodiment of the present invention.

First, when the communication unit 201 of the server device 200 receives the access request from the information communication terminal 100-1, the feature quantity extraction unit 202 extracts the face feature quantity from the image data attached to the access request (step S8). Next, the comparison unit 204 reads the face feature quantity from the permitted user identification table of the authentication information storage unit 203 (step S9). Next, the comparison unit 204 selects one face feature quantity from the face feature quantities read from the permitted user identification table (step S10).

Next, the comparison unit 204 compares the face feature quantity extracted in step S8 to the face feature quantity selected in step S10 and calculates similarity therebetween (step S11). Next, the comparison unit 204 determines whether the similarity of the face feature quantity is greater than or equal to a predetermined threshold value (step S12). When the comparison unit 204 determines that the similarity of the face feature quantity is greater than or equal to the predetermined threshold value (step S12: YES), the permission unit 206 reads identification information associated with the face feature quantity from the permitted user identification table of the authentication information storage unit 203 and permits access to personal information associated with the identification information (step S13).

When the comparison unit 204 determines that the similarity of the face feature quantity is less than the predetermined threshold value (step S12: NO) in step S12 or when the access to the personal information is permitted in step S13, it is determined whether the similarities for all the face feature quantities read in step S9 are determined (step S 14). When the comparison unit 204 determines that there is a face feature quantity for which the similarity is not determined (step S14: NO), the process returns to step S10 and another face feature quantity is selected.

In addition, when the comparison unit 204 determines that the similarities for all the face feature quantities are determined (step S14: YES), the personal information reading unit 208 reads the personal information to which access is permitted by the permission unit 206 from the personal information storage unit 207 (step S15). Then, the communication unit 201 transmits the read personal information to the information communication terminal 100-1 (step S 16).

Thereby, the user of the information communication terminal 100-1 can read the personal information about the user of the information communication terminal 100-2 without the information about the user of the information communication terminal 100-2 being input.

In this manner, according to the first embodiment, the user (applicant) of the first information communication terminal is permitted access to personal information about the user (possessor) of the second information communication terminal by confirming information (image data) indicating that the user of the first information communication terminal and the user of the second information communication terminal collaborated to perform a predetermined activity (an activity in which the users are shown together in a photo). The activity in which the users are shown together in the photo indicates that the user of the first information communication terminal and the user of the second information communication terminal have become familiar to a certain extent. Thus, it is possible to permit access only to a specific person without using a password by permitting access to information according to presence/absence of the image data.

Also, although the case in which it is determined whether to permit access when the imaging unit 101 of the information communication terminal 100-1 captures image data including an applicant for the access and transmits the image data to the server device 200 has been described in the first embodiment, the present invention is not limited thereto. For example, it may be determined whether to permit the access when the information communication terminal 100-2 transmits the same image data as the image data attached to the permission request to the information communication terminal 100-1 and the information communication terminal 100-1 transmits the image data to the server device 200. In addition, it may be determined whether to permit the access by extracting only the face region of the applicant from the image data attached to the permission request and transmitting the extracted image data to the server device 200.

Also, although the case in which only the face feature quantity read from the image data is used in the determination has been described in the first embodiment, the present invention is not limited thereto. For example, a type of information to be disclosed such as contact information, schedule information, or hobby information among personal information may be controlled based on clothing or a facial expression included in the image data, position information, or the like.

Specifically, the server device 200 includes an information extraction unit configured to extract information about the clothing or facial expression from the image data and a table configured to associate and store the information and a type (contact information, schedule information, hobby information, or the like) of information to which access is permitted, and the permission unit 206 permits access to the information about the type associated with the information extracted by the information extraction unit in the table, so that the control of the type to be disclosed can be implemented.

### <Second embodiment>

Next, the second embodiment of the present invention will be described in detail.

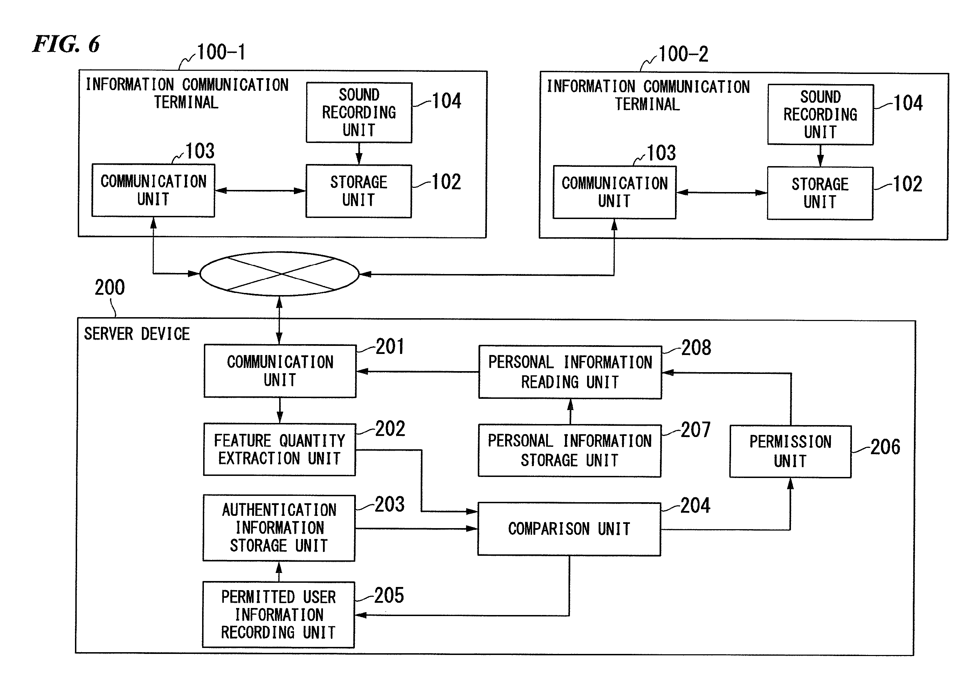

FIG. 6 is a block diagram showing a configuration of an access permission system in the second embodiment of the present invention.

The access permission system according to the second embodiment is a system which controls access to personal information by the information communication terminal 100-1 based on voice authentication using voice data in place of face authentication using image data.

The information communication terminal 100 according to the second embodiment includes a sound recording unit 104 in place of the imaging unit 101.

When the user has a conversation with a user of another information communication terminal 100 via the communication unit 103, the sound recording unit 104 records the user's voice to generate voice data. Also, the sound recording of the voice data may be automatically performed when a phone conversation starts or performed according to the user's operation (for example, pressing of a button). In addition, a monitoring unit configured to monitor phone conversation content is included and the sound recording may start when the monitoring unit detects a predetermined keyword. For example, it is possible to convert the phone conversation content into a character string according to voice recognition and start the sound recording after the predetermined keyword appears in the aforementioned character string. The voice data is recorded in the storage unit 102, attached to a permission request, and transmitted to the server device 200.

In addition, the sound recording unit 104 inputs the user's voice from a microphone (not illustrated), and generates voice data by converting the voice into a waveform. The voice data is attached to the access request and transmitted to the server device 200.

The server device 200 according to the second embodiment is different from the server device 200 according to the first embodiment in terms of the operation of the feature quantity extraction unit 202 and the information stored by the authentication information storage unit 203.

The feature quantity extraction unit 202 extracts a voice feature quantity from voice data received from the information communication terminal 100. For example, the voice feature quantity may be a voiceprint or the like. Also, the voice data received from the information communication terminal 100 is voice data attached to the permission request or voice data attached to the access request.

A possessor identification table of the authentication information storage unit 203 stores a voice feature quantity for use in authentication of the user of the information communication terminal 100 in association with the identification information about the information communication terminal 100. In addition, the permitted user identification table of the authentication information storage unit 203 stores a voice feature quantity for use in authentication for a user of a separate information communication terminal to access the personal information about the information communication terminal 100 in association with the identification information about the information communication terminal 100.

Next, the operation of the server device 200 in the second embodiment will be described.

First, the operation of the server device 200 when the permission request is received from the information communication terminal 100-2 will be described.

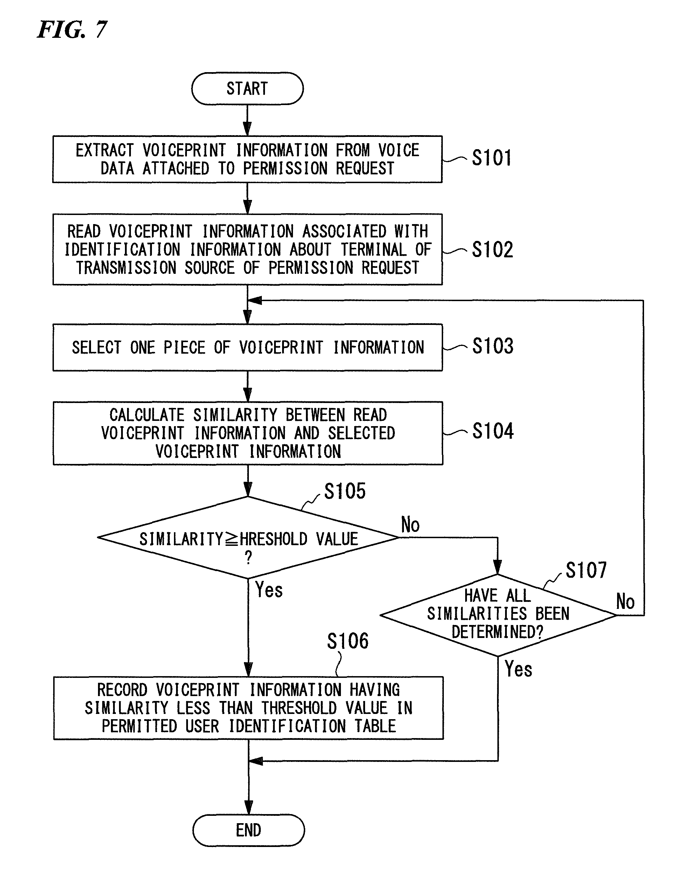

FIG. 7 is a first flowchart showing an operation of the access permission system according to the second embodiment of the present invention.

First, when the communication unit 201 of the server device 200 receives the permission request from the information communication terminal 100-2, the feature quantity extraction unit 202 extracts the voice feature quantity from the voice data attached to the permission request (step S101). Also, because the voice data attached to the permission request is voice data obtained by recording voices of a conversation, a plurality of persons are included in the voice data. Thus, the feature quantity extraction unit 202 is configured to extract a voice feature quantity of each person. For example, there is a method of classifying the voice feature quantities into a plurality of speakers for a plurality of voice feature quantities appearing during the conversation using a support vector machine or the like. Also, the conversation recorded in recorded sound data is not limited to a one-to-one conversation and may be a conversation of a plurality of persons. Also, in this case, each person is permitted access.

Next, the comparison unit 204 reads the identification information about the information communication terminal 100-2 of the transmission source from the permission request and reads a voice feature quantity associated with the identification information from the possessor identification table of the authentication information storage unit 203 (step S102). Next, the comparison unit 204 selects one voice feature quantity from voice feature quantities extracted in step S101 (step S103).

Next, the comparison unit 204 compares a voice feature quantity read in step S102 to a voice feature quantity selected in step S103 and calculates similarity therebetween (step S104). Next, the comparison unit 204 determines whether the similarity of the voice feature quantity is greater than or equal to a predetermined threshold value (step S105). When the comparison unit 204 determines that the similarity of the voice feature quantity is greater than or equal to the predetermined threshold value (step S105: YES), the permitted user information recording unit 205 associates a voice feature quantity other than a voice feature quantity having the similarity greater than or equal to the predetermined threshold value in step S105 among the voice feature quantities extracted by the feature quantity extraction unit 202 with identification information about the information communication terminal 100-2 of the transmission source of the permission request and records an association result in the permitted user identification table of the authentication information storage unit 203 (step S106).

In addition, when the comparison unit 204 determines that the similarity of the voice feature quantity is less than the predetermined threshold value (step S105: NO), it is determined whether similarities for all voice feature quantities extracted in step S101 are determined (step S107). When the comparison unit 204 determines that there is a voice feature quantity for which the similarity is not determined (step S107: NO), the process returns to step S103 and the selection of another voice feature quantity is performed. Then, when the comparison unit 204 determines that the similarities for all the voice feature quantities are determined (step S107: YES), the error is returned without performing the registration of the permitted user because the possessor himself/herself is not included in the voice data attached to the permission request and the process ends.

Next, the operation of the server device 200 when the access request is received from the information communication terminal 100-1 will be described.

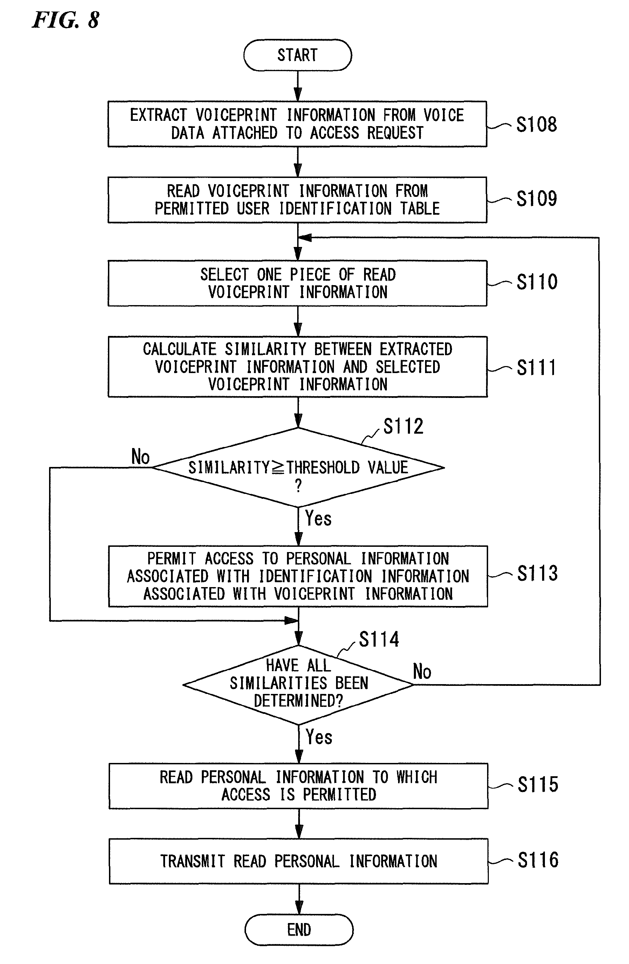

FIG. 8 is a second flowchart showing an operation of the access permission system in the second embodiment of the present invention.

First, when the communication unit 201 of the server device 200 receives the access request from the information communication terminal 100-1, the feature quantity extraction unit 202 extracts a voice feature quantity from voice data attached to the access request (step S108). Next, the comparison unit 204 reads the voice feature quantity from the permitted user identification table of the authentication information storage unit 203 (step S109). Next, the comparison unit 204 selects one voice feature quantity from the voice feature quantities read from the permitted user identification table (step S110).

Next, the comparison unit 204 compares the voice feature quantity extracted in step S108 to the voice feature quantity selected in step S110 and calculates similarity therebetween (step S111). Next, the comparison unit 204 determines whether the similarity of the voice feature quantity is greater than or equal to a predetermined threshold value (step S112). When the comparison unit 204 determines that the similarity of the voice feature quantity is greater than or equal to the predetermined threshold value (step S112: YES), the permission unit 206 reads identification information associated with the voice feature quantity from the permitted user identification table of the authentication information storage unit 203 and permits access to personal information associated with the identification information (step S113).

When the comparison unit 204 determines that the similarity of the voice feature quantity is less than the predetermined threshold value (step S 112: NO) in step S 112 or when the access to the personal information is permitted in step S 113, it is determined whether the similarities for all the voice feature quantities read in step S109 are determined (step S114). When the comparison unit 204 determines that there is a voice feature quantity for which the similarity is not determined (step S114: NO), the process returns to step S110 and another voice feature quantity is selected.

In addition, when the comparison unit 204 determines that the similarities for all the voice feature quantities are determined (step S114: YES), the personal information reading unit 208 reads the personal information to which access is permitted by the permission unit 206 from the personal information storage unit 207 (step S115).

Then, the communication unit 201 transmits the read personal information to the information communication terminal 100-1 (step S116).

Thereby, the user of the information communication terminal 100-1 can read the personal information about the possessor (information communication terminal 100-2) without the information about the possessor of the personal information being input.

Also, although the case in which it is determined whether to permit access when the sound recording unit 104 of the information communication terminal 100-1 records voice data including a voice of an applicant and transmits the voice data to the server device 200 has been described in the first embodiment, the present invention is not limited thereto. For example, it may be determined whether to permit the access when the information communication terminal 100-2 transmits the same voice data as the voice data attached to the permission request to the information communication terminal 100-1 and the information communication terminal 100-1 transmits the voice data to the server device 200. In addition, it may be determined whether to permit the access by extracting only a voice portion of the applicant from the voice data attached to the permission request and transmitting the extracted voice data to the server device 200.

Also, although the case in which only the voice feature quantity read from the voice data is used in the determination has been described in this embodiment, the present invention is not limited thereto. For example, a voice recognition process or an emotion recognition process is performed on the voice data and a type to be disclosed such as contact information, schedule information, or hobby information among personal information may be controlled based on a result of the voice recognition process or the emotion recognition process. Specifically, there are provided a feature quantity extraction unit configured to extract a feature quantity representing the emotion from the voice data and a table configured to associate and store the feature quantity and the type of information to which access is permitted, and the permission unit 206 permits access to the information about the information type associated with the feature quantity extracted by the information extraction unit in the table, so that the control of the type to be disclosed may be implemented.

### <Third embodiment>

Next, the third embodiment of the present invention will be described in detail.

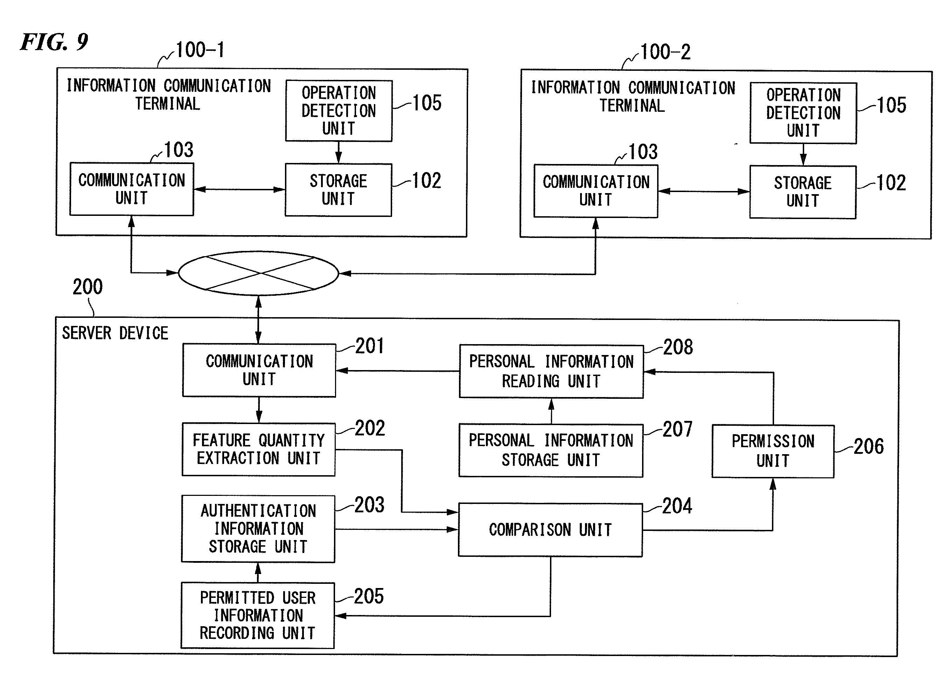

FIG. 9 is a schematic block diagram showing a configuration of an access permission system according to the third embodiment of the present invention.

The access permission system according to the third embodiment is a system for controlling access to personal information by the information communication terminal 100-1 according to whether users have shaken hands instead of face authentication or voice authentication.

The information communication terminal 100 according to the third embodiment includes an operation detection unit 105 in place of the imaging unit 101 in the first embodiment.

The operation detection unit 105 detects an operation of the user holding the information communication terminal 100. The operation detection unit 105 detects the operation of the user using an acceleration sensor, a camera module, or the like. For example, when the operation detection unit 105 is the acceleration sensor, the variation of the acceleration of the information communication terminal 100 is measured by the acceleration sensor. In addition, for example, when the operation detection unit 105 is the camera module, the operation of the user is detected by detecting the variation of a visual line of the information communication terminal 100. Also, the operation detection unit 105 may be provided inside the information communication terminal 100 or may be a module mounted on a wrist or arm and connected to the information communication terminal 100.

In addition, the operation detection unit 105 records operation data representing the detected operation of the user in the storage unit 102. Also, the recording of the operation data may start according to the user's operation (for example, pressing of a button) or the recording of the operation data may start when a monitoring unit detects a predetermined operation by providing the monitoring unit configured to monitor a regular operation.

The server device 200 according to the third embodiment is different from the server device 200 according to the first embodiment in terms of the operation of the feature quantity extraction unit 202 and the information stored by the authentication information storage unit 203.

The feature quantity extraction unit 202 records the operation data attached to the permission request received from the information communication terminal 100 in the permitted user identification table of the authentication information storage unit 203 via the permitted user information recording unit 205. On the other hand, the feature quantity extraction unit 202 outputs the operation data attached to the access request received from the information communication terminal 100 to the comparison unit 204.

Unlike the first embodiment, the authentication information storage unit 203 does not have the possessor identification table.

The permitted user identification table of the authentication information storage unit 203 stores operation data for use in authentication when a user of a separate information terminal accesses the personal information about the user of the information communication terminal 100 in association with the identification information about the information communication terminal 100.

Next, the operation of the server device 200 according to the third embodiment will be described.

First, the operation of the server device 200 when the permission request is received from the information communication terminal 100-2 will be described. When the communication unit 201 of the server device 200 receives the permission request from the information communication terminal 100-2, the feature quantity extraction unit 202 associates the operation data attached to the permission request with the identification information about the information communication terminal 100-2 of the transmission source of the permission request and records an association result in the permitted user identification table of the authentication information storage unit 203 via the permitted user information recording unit 205.

Next, the operation of the server device 200 when the access request is received from the information communication terminal 100-1 will be described.

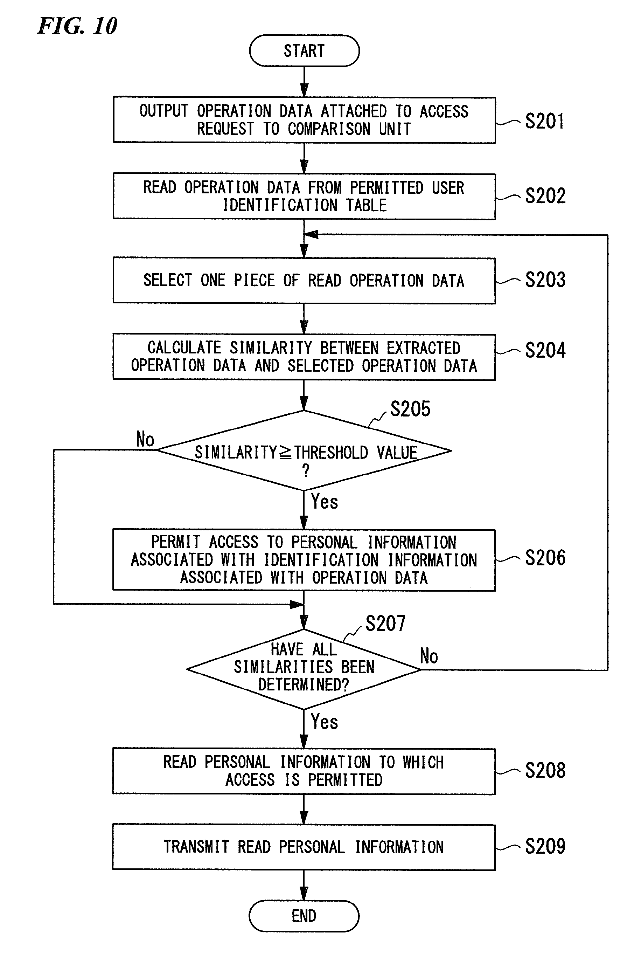

FIG. 10 is a flowchart showing an operation of the access permission system in the third embodiment of the present invention.

First, when the communication unit 201 of the server device 200 receives the access request from the information communication terminal 100-1, the feature quantity extraction unit 202 outputs the operation data attached to the access request to the comparison unit 204 (step S201). Next, the comparison unit 204 reads the operation data from the permitted user identification table of the authentication information storage unit 203 (step S202). Next, the comparison unit 204 selects one piece of the operation data from the operation data read from the permitted user identification table (step S203).

Next, the comparison unit 204 compares the operation data output in step S201 to the operation data selected in step S203 and calculates similarity therebetween (step S204). Next, the comparison unit 204 determines whether the similarity of operation data is greater than or equal to a predetermined threshold value (step S205). When the comparison unit 204 determines that the similarity of the operation data is greater than or equal to the predetermined threshold value (step S205: Yes), the permission unit 206 reads identification information associated with the operation data from the permitted user identification table of the authentication information storage unit 203 and permits access to the personal information associated with the identification information (step S206).

When the comparison unit 204 determines that the similarity of the operation data is less than the predetermined threshold value (step S205: NO) in step S205 or when the access to the personal information is permitted in step S206, it is determined whether similarities for all the operation data read in step S202 are determined (step S207). When the comparison unit 204 determines that there is operation data for which the similarity is not determined (step S207: NO), the process returns to step S203 and other operation data is selected.

On the other hand, when the comparison unit 204 determines that the similarities for all the operation data are determined (step S207: YES), the personal information reading unit 208 reads the personal information to which access is permitted by the permission unit 206 from the personal information storage unit 207 (step S208).

Then, the communication unit 201 transmits the read personal information to the information communication terminal 100-1 (step S209).

Thereby, the user of the information communication terminal 100-1 can read the personal information about the user of the information communication terminal 100-2 without user information about the information communication terminal 100 being input.

Also, although the case in which it is determined whether access is permitted using operation data representing the handshake has been described in the third embodiment, the present invention is not limited thereto. For example, a feature quantity of a pinky swear, a high five, a fist bump, or the like may be detected in addition to the handshake. In addition, it may be determined whether the operation data is operation data representing the handshake, operation data representing the pinky swear, or operation data representing the high five, and a type to be disclosed such as contact information, schedule information, or hobby information among personal information may be controlled based on a determination result. Specifically, there are provided a feature quantity extraction unit configured to extract feature quantity information (the handshake, the pinky swear, the high five, the fist bump, or the like) and a table configured to associate and store the feature quantity information and the type of information to which access is permitted, and the permission unit 206 permits access to information about a type associated with the feature quantity information extracted by the feature quantity extraction unit in the table, so that the control of the type to be disclosed may be implemented.

### <Fourth embodiment>

Next, the fourth embodiment of the present invention will be described in detail.

As in the third embodiment, an access permission system according to the fourth embodiment controls access to the personal information by the information communication terminal 100-1 according to whether the users have shaken hands.

The information communication terminal 100 according to the fourth embodiment has the same configuration as the information communication terminal 100 according to the third embodiment.

The server device 200 according to the fourth embodiment is different from the server device 200 according to the third embodiment in terms of the operation of the comparison unit 204.

The comparison unit 204 determines whether the operation data attached to the access request received from the information communication terminal 100 matches the operation data stored in the permitted user identification table of the authentication information storage unit 203.

Here, the flow of the access permission for the personal information using this access permission system will be described.

When the user of the information communication terminal 100-2 has become familiar with the user of the information communication terminal 100-1 and it is considered acceptable to disclose the personal information to the user of the information communication terminal 100-1, the user of the information communication terminal 100-2 shakes hands with the user of the information communication terminal 100-1 and transmits the permission request to which the operation data representing the operation of the handshake is attached to the server device 200. Thereby, the server device 200 records the operation data attached to the permission request in the permitted user identification table of the authentication information storage unit 203. Next, the information communication terminal 100-2 transmits the same operation data as the operation data attached to the permission request to the information communication terminal 100-1. Also, it is desirable to apply a copy guard to operation data to be transmitted.

Next, when the user of the information communication terminal 100-1 accesses the personal information about the user of the information communication terminal 100-2, the access request to which the operation data received from the information communication terminal 100-1 is attached is transmitted to the server device 200. When the operation data attached to the access request is similar to the operation data stored in the permitted user identification table, the server device 200 permits the information communication terminal 100-1 to access the personal information about the user of the information communication terminal 100-2.

Based on the above-mentioned flow, the operation of the server device 200 when the access request is received from the information communication terminal 100-1 will be described.

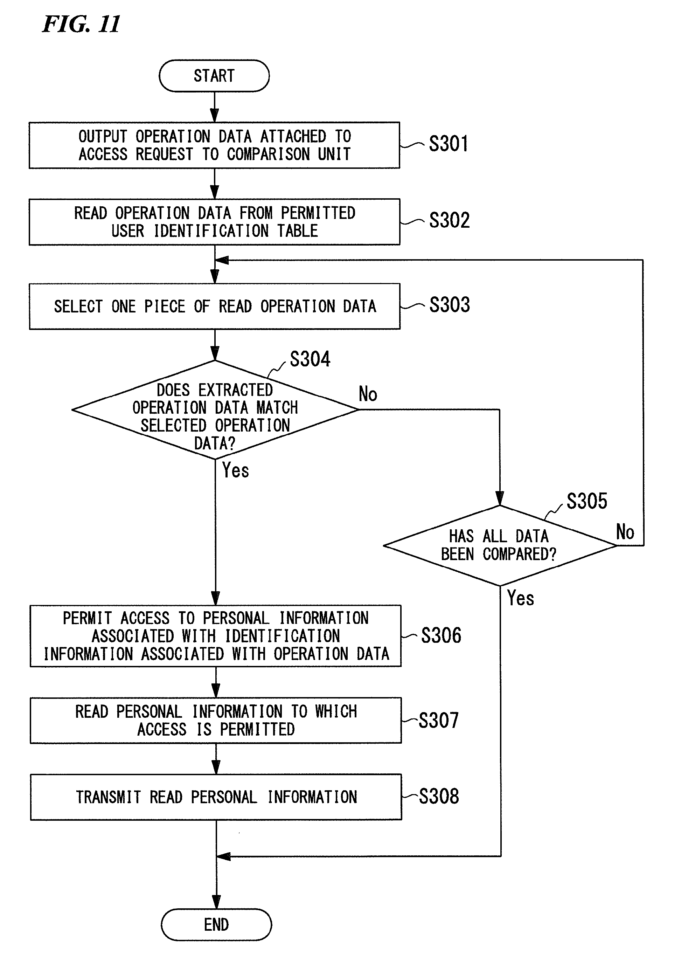

FIG. 11 is a flowchart showing an operation of an access permission system according to the fourth embodiment of the present invention.

First, when the communication unit 201 of the server device 200 receives the access request from the information communication terminal 100-1, the feature quantity extraction unit 202 outputs the operation data attached to the access request to the comparison unit 204 (step S301). Next, the comparison unit 204 reads the operation data from the permitted user identification table of the authentication information storage unit 203 (step S302). Next, the comparison unit 204 selects one piece of the operation data from the operation data read from the permitted user identification table (step S303).

Next, the comparison unit 204 determines whether the operation data output in step S301 matches the operation data selected in step S303 (step S304).

When the comparison unit 204 determines that the operation data of S301 does not match the operation data of S303 (step S304: NO), it is determined whether comparisons of all operation data read in step S302 to the operation data attached to the access request have been performed (step S305). When the comparison unit 204 determines that there is operation data which has not been compared (step S305: NO), the process returns to step S303 and the selection of other operation data is performed. On the other hand, when the comparison unit 204 determines that the comparisons with all the operation data have been performed (step S305: YES), it is determined that the operation information is not information about a handshake with another user and the process ends.

When the comparison unit 204 determines that the operation data of S301 matches the operation data of S303 (step S304: YES), the permission unit 206 reads the identification information associated with the operation data from the permitted user identification table of the authentication information storage unit 203 and permits access to the personal information associated with the identification information (step S306). Next, the personal information reading unit 208 reads the personal information to which access is permitted by the permission unit 206 from the personal information storage unit 207 (step S307). Then, the communication unit 201 transmits the read personal information to the information communication terminal 100-1 (step S308).

Thereby, the user of the information communication terminal 100-1 can read the personal information about the user of the information communication terminal 100-2 without the information about the user of the information communication terminal 100-2 being input.

Also, although the case in which it is determined whether access is permitted using the operation data representing the handshake has been described in this fourth embodiment, the present invention is not limited thereto. For example, a feature quantity of a pinky swear, a high five, a fist bump, or the like may be detected in addition to the handshake. In addition, it may be determined whether the operation data is operation data representing the handshake, operation data representing the pinky swear, or operation data representing the high five, and a type to be disclosed such as contact information, schedule information, or hobby information among personal information may be controlled based on a determination result. Specifically, there are provided a feature quantity extraction unit configured to extract feature quantity information and a table configured to associate and store the feature quantity information and the type of information to which access is permitted, and the permission unit 206 permits access to information about a type associated with the feature quantity information extracted by the feature quantity extraction unit in the table, so that the control of the type to be disclosed may be implemented.

Although the embodiments of the present invention have been described above with reference to the drawings, specific configurations are not limited to the embodiments, and various design changes, etc. are possible without departing from the subject matter of the present invention.

For example, although the case in which the personal information about the user is stored in the server device 200 has been described in each embodiment, the present invention is not limited thereto. For example, the information communication terminal 100-2 is provided with each function of the server device 200, so that a mechanism of disclosing the personal information stored by the information communication terminal 100-2 to the information communication terminal 100-1 may be configured.

In addition, in the first to fourth embodiments, authentication information (a face feature quantity, a voice feature quantity, operation data, or the like) stored by the authentication information storage unit 203 may be automatically deleted when a predetermined time has elapsed.

In addition, the information communication terminal 100 and the server device 200 described above internally have a computer system. Therefore, the above-described operation of each processing unit is stored in a computer-readable recording medium in the form of a program and the above-described process is performed by causing a computer to read and execute the program. Here, the computer-readable recording medium refers to a magnetic disk, a magneto-optical disc, a compact disc read only memory (CD-ROM), a digital versatile disc (DVD)-ROM, a semiconductor memory, or the like. In addition, the computer program may be distributed to the computer through a communication link and the computer receiving the distribution may execute the program.

In addition, the above-described program may be a program for implementing some of the above-described functions.

Further, the above-described program may be a program, i.e., a so-called differential file (differential program), capable of implementing the above-described function in combination with a program already recorded on the computer system.

### INDUSTRIAL APPLICABILITY

The access permission system according to the present invention can permit only a specific person to access personal information when a user becomes familiar with the specific person to a certain extent without using a password.

### [Description of Reference Symbols]

100 Information communication terminal
101 Imaging unit
102 Storage unit
103 Communication unit
104 Sound recording unit
105 Operation detection unit
200 Server device
201 Communication unit
202 Feature quantity extraction unit
203 Authentication information storage unit
204 Comparison unit
205 Permitted user information recording unit
206 Permission unit
207 Personal information storage unit
208 Personal information reading unit

## Claims

1. An access permission system for determining whether to permit access when a first information communication terminal requests access to information about a user of a second information communication terminal, the access permission system comprising:
a collaboration activity information generation unit configured to generate collaboration activity information which is information indicating that a user of the first information communication terminal and the user of the second information communication terminal collaborated to perform a predetermined activity; and
a permission unit configured to permit the first information communication terminal to access the information about the user of the second information communication terminal when the collaboration activity information generated is confirmed.

2. The access permission system according to claim 1,
wherein the collaboration activity information is information including unique information about the user of the first information communication terminal and unique information about the user of the second information communication terminal,
wherein the access permission system comprises an applicant confirmation information generation unit configured to generate applicant confirmation information including the unique information about the user of the first information communication terminal, and
wherein the permission unit permits the first information communication terminal to access information about the user of the second information communication terminal when it is confirmed that part of the collaboration activity information corresponds to the applicant confirmation information.

3. The access permission system according to claim 2,
wherein the unique information is biological information,
wherein the access permission system comprises a biological information extraction unit configured to extract the biological information from the collaboration activity information and the applicant confirmation information, and
wherein the permission unit confirms that the part of the collaboration activity information corresponds to the applicant confirmation information by determining whether there is information similar to the biological information extracted by the biological information extraction unit from the applicant confirmation information among the biological information extracted from the collaboration activity information.

4. The access permission system according to claim 3,
wherein the unique information is face information,
wherein the collaboration activity information is image data in which a face of the user of the first information communication terminal and a face of the user of the second information communication terminal are shown together, and
wherein the applicant confirmation information is image data in which the face of the user of the first information communication terminal is shown.

5. The access permission system according to claim 3,
wherein the unique information is a voice feature quantity,
wherein the collaboration activity information is voice data including a voice of the user of the first information communication terminal and a voice of the user of the second information communication terminal, and
wherein the applicant confirmation information is voice information about the user of the second information communication terminal.

6. The access permission system according to claim 2,
wherein the collaboration activity information is feature quantity information about a contact activity by the user of the first information communication terminal with the user of the second information communication terminal,
wherein the applicant confirmation information is feature quantity information about a contact activity by the user of the second information communication terminal with the user of the first information communication terminal, and
wherein the permission unit confirms whether similarity between the collaboration activity information and the applicant confirmation information is greater than a predetermined threshold value.

7. The access permission system according to any one of claims 1 to 3,
wherein the collaboration activity information is predetermined feature quantity information which varies with time,
wherein the access permission system comprises a monitoring unit configured to monitor variation of the feature quantity information, and
wherein the collaboration activity information generation unit extracts subsequent feature quantity information as the collaboration activity information when the monitoring unit detects that the feature quantity information has varied in a predetermined pattern.

8. The access permission system according to any one of claims 1 to 7,
wherein the information about the user of the second information communication terminal is recorded in a server device, and
wherein the permission unit is provided in the server device.

9. The access permission system according to claim 8,
wherein the server device includes a possessor confirmation information storage unit configured to store possessor confirmation information including unique information about the user of the second information communication terminal, and
wherein the permission unit permits the first information communication terminal to access information about the user of the second information communication terminal when it is confirmed that part of the collaboration activity information corresponds to the possessor confirmation information.

10. The access permission system according to any one of claims 1 to 9, comprising:
a feature quantity extraction unit configured to extract feature quantity information from the collaboration activity information; and
a table configured to associate and store the feature quantity information and a type of information for permitting access,
wherein the permission unit permits access to information about a type associated with the feature quantity information extracted by the feature quantity extraction unit in the table among the information about the user of the second information communication terminal.

11. An access permission determination method of determining whether to permit access when a first information communication terminal requests access to information about a user of a second information communication terminal, the access permission determination method comprising:
a first step of generating, by the second information communication terminal, collaboration activity information which is information indicating that a user of the first information communication terminal and the user of the second information communication terminal collaborated to perform a predetermined activity; and
a second step of permitting, by a device storing the information about the user of the second information communication terminal, the first information communication terminal to access the information about the user of the second information communication terminal when the collaboration activity information generated is confirmed.

12. The access permission determination method according to claim 11,
wherein the collaboration activity information is information including unique information about the user of the first information communication terminal and unique information about the user of the second information communication terminal,
wherein the access permission determination method further comprises a third step of generating, by the first information communication terminal, applicant confirmation information including unique information about the user of the first information communication terminal, and
wherein, in the second step, the device storing the information about the user of the second information communication terminal permits the first information communication terminal to access information about the user of the second information communication terminal when it is confirmed that part of the collaboration activity information corresponds to the possessor confirmation information
